# EUROPEAN PATENT APPLICATION

(11) **EP 4 741 324 A1**
(43) Date of publication of application: **13.05.2026**
(21) Application number: 24211296.9
(22) Date of filing: 07.11.2024
(51) Int. Cl.: B65G 47/86

(54) **TRANSPORT APPARATUS AND METHOD FOR TRANSPORTING PACKAGE BODIES**

(71) Applicant: SIG Services AG, 8212 Neuhausen am Rheinfall (CH)
(72) Inventor: SCHMITT, Heiko, 52525 Heinsberg (DE)
(74) Representative: Cohausz & Florack

(57) **Abstract**

Described and shown is a transport apparatus (1) for transporting package bodies (4), comprising a conveyor (2) having a plurality of cells (3) for conveying package bodies (4) in the cells (3), wherein the conveyor (2) is designed to circumferentially convey the cells (3) in an endless fashion, wherein each cell (3) comprises at least one holding arm (12) for holding a package body (4) in the cell (3), wherein the at least one holding arm (12) is displaceable between a holding position for holding the package body (4) and a transfer position for taking over the packaging body (4) by the cell (3), wherein the at least one holding arm (12) is coupled to at least one actuation lever (13) designed to be forcefully displaced from an passive position into an active position by the package body (4) while taking over the package body (4) by respective cell (3), wherein the at least one actuation lever (13) is designed to forcefully displace the at least one holding arm (12) of respective cell (3) from the transfer position into the holding position by displacement of the actuation lever (13) from the passive position into the active position and wherein the at least one actuation lever (13) and/or cell (3) is designed such that the actuation lever (13) is held in a form-fit or force-fit manner at a base element of the cell (3) in the active position. With said transport apparatus damaging of package bodies can be avoided without slowing down the transport velocity of the package bodies and/or the throughput of package bodies and without the need for an overly complex apparatus design.

## Description

The invention relates to a transport apparatus for transporting package bodies, comprising a conveyor having a plurality of cells for conveying package bodies in the cells. Further, the invention relates to a method for transporting package bodies with such a transport apparatus.

Transport of package bodies occurs in particular in the context of filling package bodies with products, such as food and/or beverages. Said package bodies can have different forms and may or may not contain product depending on whether the package bodies are transported prior or after filling with a product in a filling machine.

Filling machines for filling package bodies that are open on one side with products are used in the food and beverage industry, for example. The package bodies, which are open on one side, are formed from a package material in the form of a cardboard composite, for example. In particular, the package material forms a laminate comprising a cardboard layer and outer, in particular thermoplastic, plastic layers, for example polyethylene (PE). The cardboard gives the package material sufficient stability to form packages that can be easily handled and stacked, for example. The plastic layers protect the cardboard from moisture and the products, especially food, from taking up undesirable substances from the package material. In addition, further layers, such as diffusion protection layers, if necessary an aluminum layer, can be provided to prevent diffusion of oxygen and other gases through the package material.

In the known filling machines, package bodies are typically filled with products in the form of foodstuffs, in particular beverages, whereby flowable products are predominantly used. In particular, for reasons of shelf life, foodstuffs are filled into package bodies in a sterile or aseptic environment of the filling machine, which is also referred to as an aseptic zone or aseptic area. The package bodies are therefore sterilized in the filling machine, then filled and sealed under the most sterile conditions possible. If appropriate package materials are used, the package body is closed by sealing the open end to form a head or so called gable top.

The package bodies are preferably formed on the filling machine from package sleeves which are open at opposing longitudinal ends and have been produced from package material blanks, in particular by sealing the longitudinal edges of the package material blanks to one another. The package sleeves are folded flat and transferred as a stack to a magazine of the filling machine, where they are removed and unfolded and then, for example, placed on a mandrel of a so-called mandrel wheel, on which a bottom is folded and sealed at a longitudinal end of the package sleeve. This results in a package body that is open on one side, which is pulled off the mandrel wheel and fed into a sterilization zone of the filling machine. This is usually done by transferring the package bodies one after the other to cells of a transport device comprising a cell chain. In the sterilization zone, the package bodies are preheated with hot sterile air and then sterilized, typically with hydrogen peroxide (HzOz), and dried with sterile air. The sterile package bodies are transported by the transport device to the filling and sealing zone, where they are filled in a filling station and then sealed in a head sealing station to form a package, before the filled and sealed package is transported out of the filling and sealing zone by the transport device and then removed from the corresponding cells of the transport device.

Alternative filling machines are designed in a largely similar way. A filling machine is also known in which a mandrel wheel and a transport device comprising a cell chain are dispensed with. Instead, the package sleeves are transferred to a transport device comprising a traveling assembly, thereafter sterilized and only then sealed on the bottom side and filled.

After filling and closing of the package bodies, said package bodies are transferred to a transfer apparatus for transporting the package bodies in a defined manner to a packaging installation for packaging the package bodies prior to shipment. In consequence, package bodies are transported to the filling machine, through the filling machine and away from the filling machine. In each separate transport step the handling of the package bodies is important, since it is desirable to transport the package bodies fast, precise and without any damages.

Further, transport apparatuses that are not used in connection with filling package bodies in the filling machine have in principle the same requirements regarding transport of the package bodies. The package bodies need to be conveyed fast, precise and reliable, wherein the package bodies might be filled with a product. Because filled package bodies are in general more stable and more stiff, in many cases higher forces can be applied when handling filled package bodies. However, such package bodies oftentimes are much heavier than unfilled package bodies, so that applying higher forces to the packages are essential for their transport. Damages of the package bodies should be avoided in any case. However, small scratches and little abrasion on the package bodies cannot be fully avoided due to the guiding of the package bodies during transport even if said package bodies are conveyed in cells of a conveying device, wherein each cell holds a single package body, which also allows for a very precise and reliable transport of the package bodies.

When conveying package bodies along a curved path centrifugal forces act on the package bodies. This can be problematic in particular in case the package bodies are held in separate cells of a conveyer while conveyed along the curve, since the centrifugal forces may result in package bodies accidentally leaving the cell. In order to ensure that the package bodies cannot accidentally leave the cells of the conveyor guide rails have been used along which the package bodies are conveying through a curved path. However, package bodies engaging with the guide rails can be scratched or otherwise damaged. This is in particular the case with filled package bodies, because in this case higher centrifugal forces act on the package bodies due to the higher weight of the filled package bodies compared to unfilled package bodies. Cells which apply high holding forces to the package bodies in order to avoid unnecessary contact with the guide rails can also damage the package due to the high holding forced or have a very complex design, which is prone to failure.

Therefore, the object of the present invention is designing and further developing the transport apparatus and the method, each of the type mentioned at the beginning and described in more detail above, in such a way that damaging of package bodies can be avoided without slowing down the transport velocity of the package bodies and/or the throughput of package bodies and without the need for an overly complex apparatus design.

This object is solved according to claim 1 with a transport apparatus for transporting package bodies, comprising a conveyor having a plurality of cells for conveying package bodies in the cells, wherein the conveyor is designed to circumferentially convey the cells in an endless fashion, wherein each cell comprises at least one holding arm for holding a package body in the cell, wherein the at least one holding arm is displaceable between a holding position for holding the package body and a transfer position for taking over the packaging body by the cell, wherein the at least one holding arm is coupled to at least one actuation lever designed to be forcefully displaced from an passive position into an active position by the package body while taking over the package body by respective cell, wherein the at least one actuation lever is designed to forcefully displace the at least one holding arm of respective cell from the transfer position into the holding position by displacement of the actuation lever from the passive position into the active position and wherein the at least one actuation lever and/or cell is designed such that the actuation lever is held in a form-fit or force-fit manner at a base element of the cell in the active position

The object is also solved according to claim 11 with a method for transporting package bodies with a transport apparatus according to any one of claims 1 bis 10,
- wherein the package bodies are inserted into cells at a transfer area, conveyed along at least one curve and discharged from the cells at a discharge area,
- wherein the package bodies when inserted into the cells engage with at least one actuation lever in the cells and forcefully displace the at least one actuation lever from a passive position into an active position,
- wherein the at least one actuation lever while being displaced from a passive position into an active position forcefully displaces at least one holding arm of the respective cell from a transfer position into a holding position,
- wherein the at least one holding arm of each cell being arranged in the holding position holds a package body in a form-fit or force-fit manner against discharging in a discharge direction relative to the cell while traveling along the at least one curve.

According to the invention the transport apparatus comprises a conveyor which in turn has a plurality of cells, each of which are designed to take over a single package body in a transfer area of the conveyor. The cells for taking over package bodies are conveyed circumferentially in an endless fashion, so that the cells repeatedly travel to the transfer area for taking over package bodies. Therefore, the taken over package bodies travel in said cells and together with said cells along at least one curve to a discharge area. In said at least one curve centrifugal forces act on the package bodies held in the cells. However, the package bodies are securely held in place when traveling along said curve by the at least one holding arm of each cell that is arranged in a holding position. In order to transfer the package bodies to the cells the holding arm can be moved from the holding position into a transfer position and back.

In order to ensure that taking over a package body by a cell always goes hand in hand with moving the holding arm from the transfer position into the holding position, the holding arm in each case is coupled with an actuation lever that can be moved between a passive position and an active position with respect to a base element of the cell back and forth. When a package body is taken over by a cell the package body engages with at least one actuation lever such that the package body displaces the actuation lever from its passive position into its active position. In one possible embodiment the package body pushes with its rear side against the actuation lever when inserting into the cell. The actuation lever has no other option than to move from its initial passive position to its active position by the time the package body is more or less fully inserted into the cell. This displacement of the actuation lever goes hand in hand with a displacement of at least one respective holding arm from a transfer position into a holding position.

In order to securely hold the holding arm in the holding position and, therefore, securely holding the package body in the cell, the actuation lever is held in the active position at a base element of the cell in a form-fit or force-fit manner. However, the actuation lever can be moved back into the passive position in order to force the respective holding arm back into a transfer position, so that the package body can simultaneously or subsequently be removed from the cell. In this respect it is generally advantageous if the cell with the at least one holding arm in the transfer position has an at least essentially u-shaped configuration.

The package bodies can be made from different material, whereby package bodies made at least essentially form cardboard composite materials are in particular preferred. This is because such package bodies can easily be damaged during transport. Independent of the material of the package bodies, the package bodies can be in the form of a package sleeve, that is open on opposing sides, or open on only one side. Further, the package bodies can be empty or filled or, which is in particular preferred, filled and closed.

In a first particularly preferred embodiment of the transport apparatus the actuation lever is provided next to the base element of the cell. Thus, the actuation lever can be pushed backwards in the direction of the base element of the cell if the package body is inserted into the cell to such an extend that the package body during insertion into the cell engages with the actuation lever and pushes the actuation lever back in the direction of the base element of the cell. In addition, the actuation lever can be arranged in such a way that the actuation lever in the passive position engages with a rear side of the package body while the package body is inserted into the cell. The rear side is then possibly facing away from the opening of the cell and/or facing in the direction of the base element of the cell.

The package bodies can be secured in the cells even more when each cell has at least two holding arms for holding the package body. These holding arms can hold the respective package body at opposing sides. This is especially but not necessarily the case if the holding arms hold the package body by frictional forces. However, it can be more gentle for the package body if the holding arms hold the package body from opposing sides but not necessarily at the opposing sides of the package body. For example, the holding arms can at least partially reach around the package body in order to positively holding the package body in the respective cell. The holding arms in the holding position may at least in part close the opening of the, in particular u-shaped, cells. Said opening is present with the at least one holding arm in the transfer position.

Independent from the above, the at least one actuation lever may be provided at least essentially between the holding arms. In this case the package body can reliably engage with the actuation lever without impeding the holding arms. This is even more true, in case the actuation lever is arranged next to the base element.

For a simpler design it may be suitable to provide cells having at least two actuation levers. In this case each actuation lever can easily be connected firmly to one of the holding arms of the respective cell. As a consequence, each holding arm can be displaced by one actuation lever without the need for an unnecessary effort in terms of design. For example, a space consuming and error-prone lever mechanism can be dispensed with.

In one preferred embodiment the at least one actuation lever and at least one holding arm can form part of a common swiveling element of the respective cell. In this case the swivel element can be designed to be swiveled about a swivel axis for displacing the at least one holding arm from the transfer position into the holding position. Said swivel axis may be arranged between the actuation lever and the holding, so that swiveling of the actuation lever goes hand in hand with swiveling of the holding arm in the same circumferential direction. Thus, the actuation lever can be swiveled about the swivel axis from the passive position into the active position and vice versa while the holding arm is swiveled about the swivel axis from the transfer position into the holding position and vice versa.

In case the at least one holding arm is designed to positively hold the package body of respective cell at the front side of the package body, while the holding arm is in the holding position, the package body is reliably prevented from accidently slipping out of the cell due to circumferential forces when the package bodies are conveyed along a curved path. Therefore, the front side in this respect can be regarded as the side which is adjacent to the free end of the holding arms and/or facing away of the rear side of the packaging body adjacent to the at least one actuation lever. In addition, or alternatively the front side of the package body can also be considered to be the side of the package body that is facing away from the at least one actuation lever and/or facing away from the base element while the package body is held in and conveyed by the cells of the conveyor.

It is advantageous if the actuation levers of the conveyor are secured in their active position while the package bodies shall be securely conveyed in respective cell so that the holding arms are not displaced from the holding position into the transfer position by accident. The at least one actuation lever can be held in the active position at the base element of the respective cell in a simple and, therefore, preferred embodiment by clamping forces, by magnetic forces and/or by spring forces. For example, the actuation lever can be held in a clamping connection at the base element, so that greater forces must be applied to the actuation lever, when the actuation lever is to be displaced from the active position into the passive position. Such forces can easily be applied in case the package body shall be discharged from the respective cell.

The conveyor is preferably designed to convey the cells along at least one curve between a transfer area for taking over package bodies and a discharge area for discharging package bodies. Such conveyors are for example suitable for taking over filled cardboard/plastic-packages from a filling machine and for transferring said packages to a packaging installation. The cells are emptied in the discharge area and conveyed back to the transfer area without any package bodies inserted in said cells. However, between the transfer area and the discharge area packaging bodies are inserted in the cells, which cells are designed for securely holding the package bodies against centrifugal forces acting at the package bodies while being conveyed along the curve.

Insertion of package bodies into the cells in the transfer area can be impaired in case the holding arms are not positioned in the transfer position prior to inserting the package bodies into respective cells. Therefore, at least some of the holding arms can be provided with at least one magnet such that adjacent holding arms of neighboring cells are held onto each other in the transfer position by way of magnetic forces. For example, in case the holding arms are made from a magnetic material it might be sufficient to provide every other holding element with a magnet. The magnets should be arranged relative to the respective holding arms in a way, that the magnet of one holding arm gets in touch with a magnet of an adjacent holding arm or at least with an adjacent holding arm as such in the transfer position.

The package bodies can be discharged in a simple and reliable manner, if at least one discharge guide is provided in the discharge area. The discharge guide can be designed to engage with the package bodies and, thereby, push the package bodies out of respective cells when the package bodies are conveyed passed the discharge guide. In other words the discharge guide can engage into the cells one after another and thereby push the package bodies out of respective cells one after another.

In a first particularly preferred embodiment of the method the at least one actuation lever of each cell is held in the active position, in particular at a base element of the cell, in a form-fit or force-fit manner, so that the package body is securely held in the respective cell at the same time. This can be the case during the travel of the cell from the transfer area to the discharge area, in particular while the cell travel along a curved path. The force-fit connection can easily and at the same time reliably established by using at least one magnet and/or at least one spring member.

In a discharge area the cells can be conveyed past at least one discharge guide. By doing so the discharge guide engages with the packaged bodies, in particular while the discharge guide is inserted in the cells as a result of the cell passing the discharge guide. In consequence, the discharge guide forces the package bodies out of the cells while passing the discharge area. This can be achieved in a simple and reliable way by the discharge guide pushing the package bodies out of the cell while said cells are conveyed past the discharge guide.

The package bodies being pushed out of the cells in the discharge area can go hand in hand with forcing the holding arms to be displaced from the holding position into the transfer position, since the package bodies push the holding arms out of the way while the package bodies forcefully slip out of the respective cells. By doing so the actuation levers are simultaneously be displaced from the active position in the passive position as a result of the displacement of the holding arms from the holding position into the transfer position. Therefore, the cells are ready for taking over further package bodies when passing the transfer area. For displacing of the actuation levers from the active position into the passive position as well as for displacing the holding arms from the holding position into the transfer position it may be necessary to overcome the forces holding the actuation levers in the active position at the base element of the cells.

In the transfer position the adjacent holding arms of neighboring cells can hold each other in said position in order to avoid accidental displacement of the holding elements in the direction of the holding position while the cells are conveyed from the discharge area to the transfer area. Said connection can for example be established by at least one magnet arranged at at least every other holding arm. The magnetic forces for securing the holding arms in the transfer position can be overcome without any problems by the package body pushing against the actuation levers while the package body is inserted in respective cell.

In the following, the invention is explained in more detail with reference to a drawing showing only one embodiment. The drawing shows in
- Fig. 1: a transport apparatus having a conveyor for conveying package bodies according to the invention in a top view from above,
- Fig. 2: a package body next to a cell of the conveyor for conveying the package body in a schematic perspective view,
- Fig. 3A-C: successive steps of transferring a package body into a cell of the conveyor according to the invention in a schematic detail top view from above and
- Fig. 4A-D: successive steps of discharging a package body from the cells of the conveyor according to the invention in a schematic sectional view from above and a schematic top view.

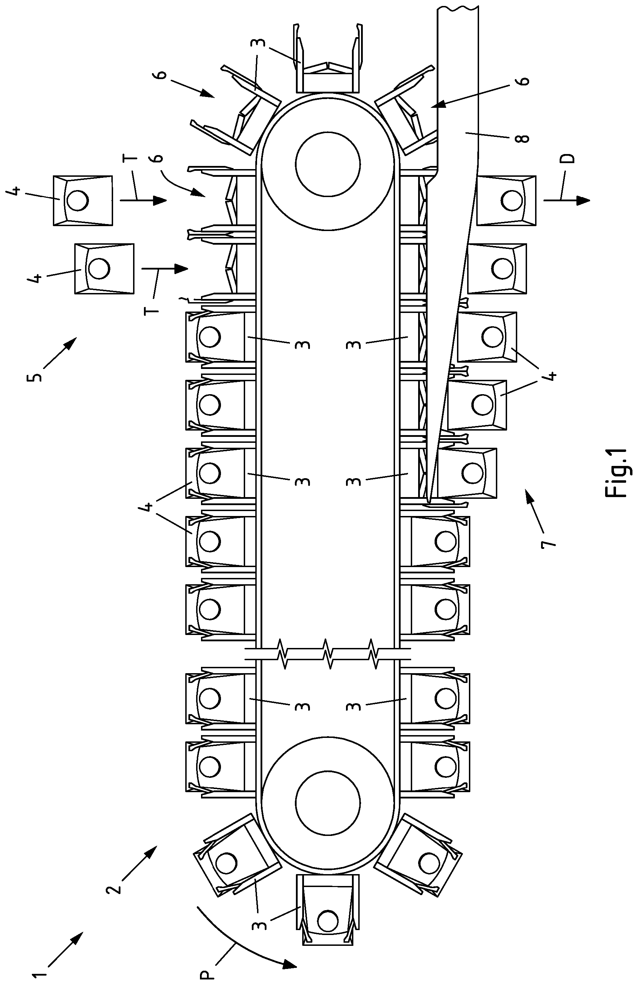

Fig. 1 shows a transport apparatus 1 having a conveyor 2 that is arranged endlessly along a circumferential path of the transport apparatus 1. Along the conveyor 2 a plurality of cells 3 are arranged one after the other, wherein said cells 3 are designed for taking over package bodies 4 in a transfer area 5 of the transport apparatus 1. Therefore, the cells 3 are u-shaped and provide an opening 6 to the outside of the conveyor 2, so that the package bodies 4 can be inserted from the outside of the conveyor 2 through said openings 6 into the cells 3 in a transfer direction T. Thereafter, the cells 3 are conveyed together with the package bodies 4 along a curved path P to a discharge area 7, where the package bodies 4 are discharged from the cells 3 through the opening 6 of the u-shaped cells 3 to the outside of the conveyor 2 in a discharge direction D, which direction is opposite to the transfer direction T in relation to the cells 3. Discharging of the package bodies 4 is provoked by two discharge guides 8 running essentially parallel to each other. While the cells 3 are conveyed past the discharge guides 8 the discharge guides 8 engage with the cell 3 and get in contact with the package bodies 4 at different heights of the package bodies 4. Because of the relative movement of the cells 3 in respect to the discharge guides 8 the discharge guides 8 push the package bodies 4 out of the openings of the cells 3 in the discharge direction D.

In a preferred embodiment the cells 3 do not move while respective package bodies 4 are inserted into the cells. The cells 3 can be transported stepwise whereby in each step one package body 4 is fed to one cell 3 as shown in Fig. 1. Subsequently to taking over several package bodies 4 in respective cells 3 of the conveyor 2, said package bodies 4 can be conveyed in the corresponding cells 3 in one go to the discharge area 7. Simultaneously further package bodies 4 can be taken over by other cells 3 in a stepwise manner as previously described.

The package bodies 4 shown are provided by packages, that are mainly made from a cardboard composite material and that are filled with a foodstuff, such as a beverage. The package bodies 4 can be transferred from a filling machine to the transport apparatus 1 and transferred from the transport apparatus 1 to a packaging installation.

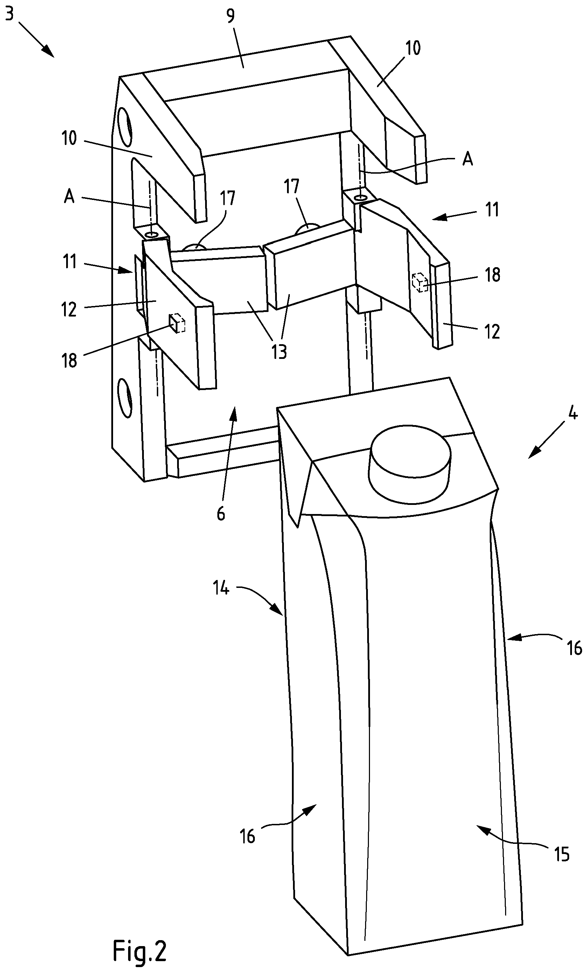

Fig. 2 shows a single cell 3 of the conveyor 2 together with a package body 4 to be inserted into the cell 3. The shape and dimensions of the cell 3, therefore, generally correspond to the shape and dimensions of the package body 4. The cell 3 comprises a base element 9 at which two guiding arms 10 and two swivel elements 11 are held. The guiding arms 10 and the swivel elements 11 are arranged so that the cell 3 is at least essentially u-shaped with an opening 6 directed to the package body 4 and the outside respectively. The swivel elements 11 can be swiveled relative to the base element 9 about swivel axis A that are at least essentially vertical and parallel to a longitudinal axis of the package body 4. Further, each swivel elements 11 comprise at different sides of the swivel axis A a holding arm 12 and an actuation lever 13, so that the holding arm 12 and the actuation lever 13 form different laver arms of the swivel element 11. In Fig. 2 the holding arms 12 are in a transfer position for taking over the package body 4 while the actuation levers 13 are in a passive position, in which the package body 4 does not engage with the actuation lever 13.

The package body 4 comprises a rear side 14 facing towards the base element 9 of the cell 3 and a front side 15 facing away from the base element 9. Further, the package body 4 comprises two lateral sides 16 which may be at least essentially aligned with the guiding arms 10 of the cell 3. The guiding arms 10 are positioned relative to the holding arm 12 such that the guiding arms 10 guide a nonaligned package body 4 while being inserted into the cell 3. In consequence, nonaligned package bodies 4 get aligned by engagement of the guiding arm 10 with a lateral side 16 of the package body 4 so that the package body 4 does not get in contact with the holding arms 12. Contact of the package body 4 with the holding arms 12 could interfere with proper insertion of the package body 4 into the cell 3 and could even damage the holding arms 12. The holding arms 12 and the base element 9 are provided with magnets 17,18 for holding the holding arms 12 in a holding position as well as in the transfer position.

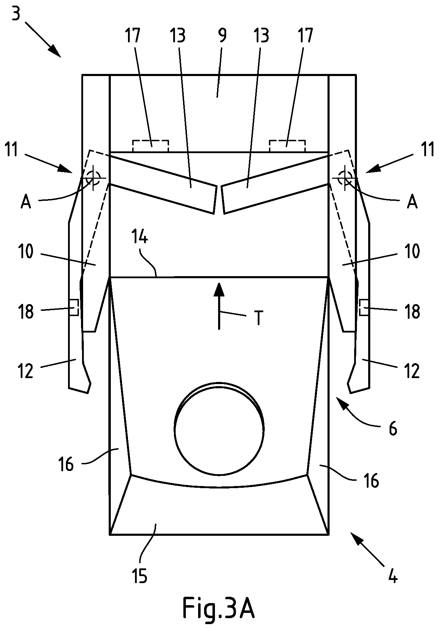

In Fig. 3A-C transfer of the package bodies 4 to the cells 3 of the conveyor 2 is shown. According to Fig. 3A a package body 4 is inserted into an essentially u-shaped cell 3, through its outer opening 6 in the transfer direction T. The package body thereby passes the free ends of holding arms 12 at opposing lateral sides 16 of the package body 4 essentially perpendicular to the transfer direction T. In addition to the holding arms 12 guiding arms 10 are present which are arranged essentially parallel to the transfer direction T. The guiding arms 10 and the base element 9 are arranged in a u-shaped fashion, whereby the guiding arms 10 are essentially parallel to the holding arms 12. In case a package body 4 is not fully aligned with the cell 3 and the cell opening 6 respectively, the package body 4 engages with the guiding arms 10 whereby the package body 4 is aligned relative to the cell opening 6. This preferably occurs without any contact between the holding arms 12 and the package bodies 4.

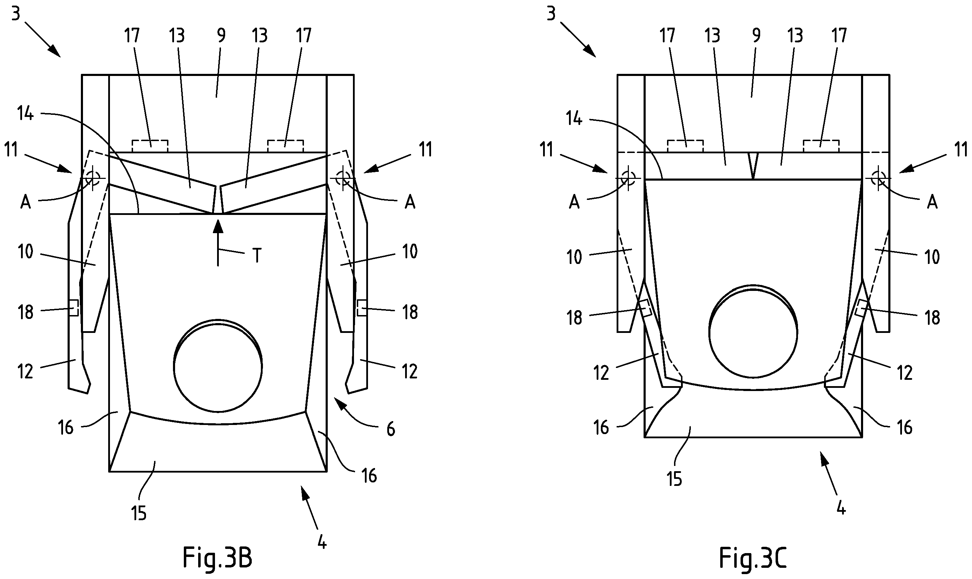

As shown in Fig. 3B the rear side 14 of the package body 4 facing in the transfer direction T and facing towards base element 9 engages with actuation levers 13 between the holding arms 12 and the guiding arms 10. The actuation levers 13 are positioned in a passive position next to the base element 9 such that the rear side 14 of the package body 4 engages with the actuation levers 13 und pushes the actuation levers 13 from the passive position backwards in the active position closer to the base element 9 while the package body 4 is inserted into the cell 3. The actuation levers 13 reach the active position while the package body 4 which is still in engagement with the actuation levers 13 reaches the final position in the cell 3, in which the package body 4 is fully taken over by the cell 3, as it is shown in Fig. 3C.

Each actuation lever 13 is fixedly connected to one holding arm 12. Each actuation lever 13 and the corresponding holding arm 12 form a swiveling element 11, that held via a swivel axis A at the base element 9. In the present case, the swivel axis A is essentially perpendicular to the extension to of the actuation lever 13 and the holding arm 12. Because the actuation levers 13 and the corresponding holding arms 12 are swiveled simultaneously about the swivel axis A in the same direction the holding arms 12 get displaced from the initial transfer position to a holding position, which is reached simultaneously with the corresponding actuation levers 13 reaching their active position.

In Fig. 3C the package body 4 is fully inserted in the corresponding cell 3, the actuation levers 13 are in their active position and the holding arms 12 are in their holding position. In the holding position the holding arms 12 engage with the lateral sides 16 of the package body 4. Further, the free ends of the holding arms 12 are placed behind the front 15 side of the package body 4 seen from the base element 9 of the cell 3, such that the opening 6 of the cell 3 for insertion and discharging the package body 4 is partly closed by the free ends of the holding arms 12. Thus, the holding arms 12 positively and possibly also frictionally engage with the package body 4. In the respective position of the holding arms 12, the corresponding actuation levers 13 held in the active position by magnets 17 of the base element 9 of the cell 3 engaging with the magnetic actuation levers 13. Therefore, the package body 4 is secured by the holding arms 12 in the cell and against accidently slipping out in the discharge direction D by a form-fit connection and possibly a force-fit connection, while the package body 4 travels through one of the curves of the curved path P of the conveyor 2.

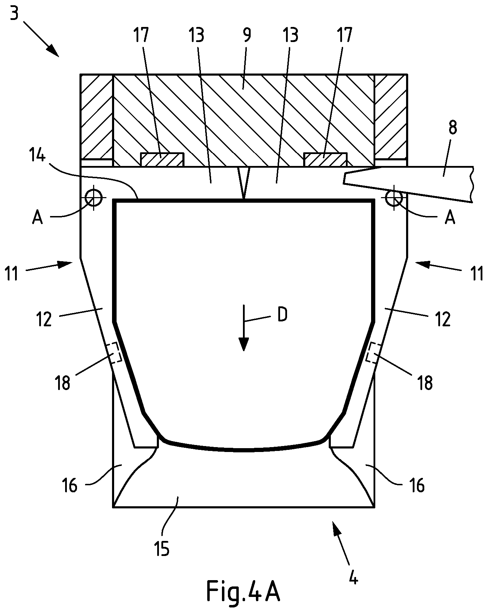

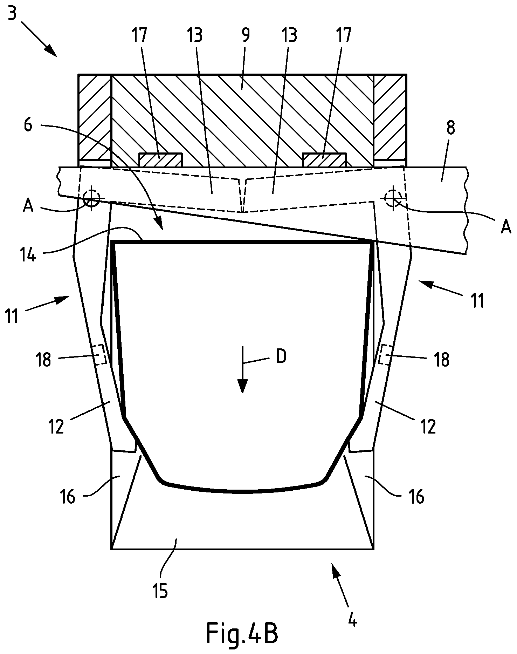

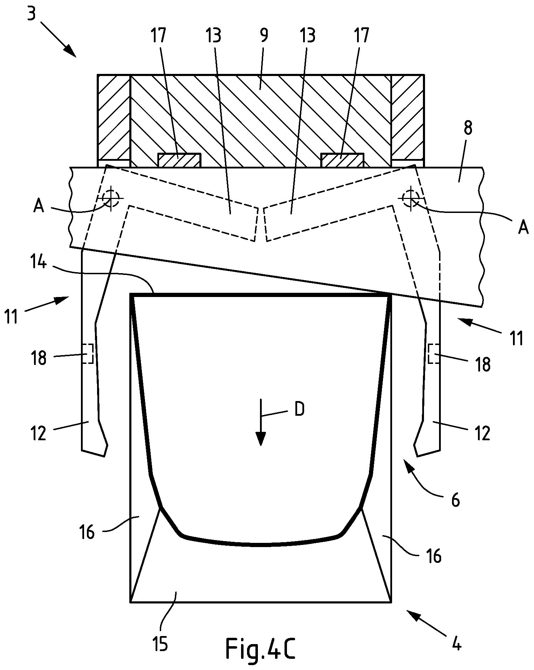

In Fig. 4A-D discharging of the package bodies 4 in the discharge area 7 is shown. The cells 3 holding the package bodies 4 engage with discharge guides 8 while passing the discharge guides 8, which in the present embodiment are arranged more or less parallel to each other. In the sectional view of Fig. 4A-C only one discharge guide 8 is shown for the sake of clarity. The discharge guides 8 get in contact with the package body 4 held by respective cell 3. While the cell 3 passes the discharge guides 8 the discharge guides 8 engage more and more with the cell 3 and push the package body 4 more and more out of the cell 3, which is shown in Fig. 4A-C. While the package body 4 is pushed out of the cell 3 by the discharge guides 8 the free ends of the holding arms 12 are pushed to the lateral sides by the front side 15 of the package body 4 facing away from the base element 9 of the cell 3. The package body 4 pushes with such forces against the holding arms 12, that the actuation levers 13 disengage with the magnets 17 of the base element 9 of the cell 3. Thus, due to the engagement with the package body 4 the package body 4 is pushed out of the cell 3 by the discharge guides 8 while the holding arms 12 are swiveled from a holding position to a transfer position giving way form the package body 4 to be moved out of the cell 3 via outer opening 6. At the same time the actuation levers 13 are moved from the active position to the passive position.

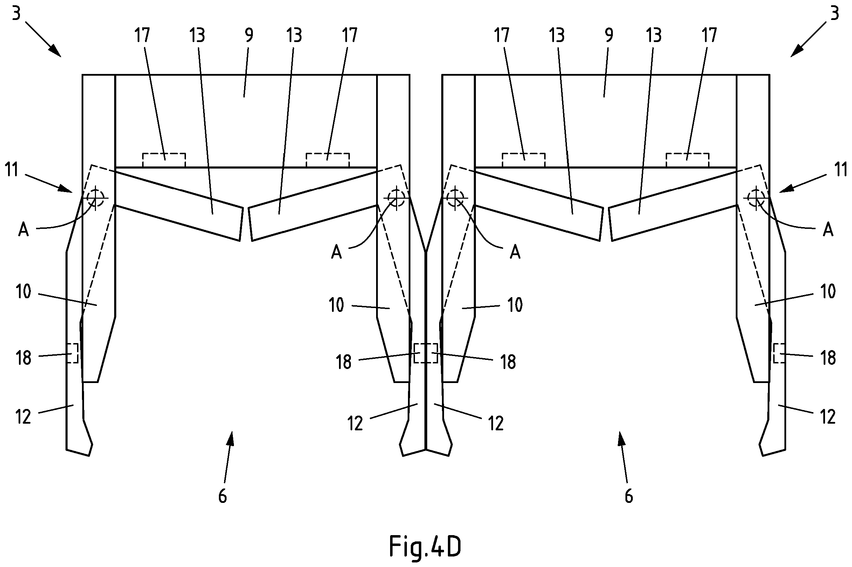

Fig. 4D shows adjacent cells 3 after the package bodies 4 have been discharged. The holding arms 12 are, therefore, in the transfer position and the actuation levers 13 in the passive position. The holding arms 12 and the actuation levers 13 should still be arranged in said positions when the cell 3 reaches the transfer area 5 for the next time in order to not impede taking over other package bodies 4 in the transfer area 5. Therefore, it is preferred that the holding arms 12 and the actuation levers 13 do at least very slightly moves with respect to the base elements 9 of the respective cells 3 while the cells 3 are moved from the discharge area 7 to the transfer area 5. That is achieved by magnets 18 that are fixed to the holding arms 12 at a position that the magnets 18 engages with the adjacent holding arm 12 in case both holding arms 12 are arranged in the transfer position. As a consequence, the holding arms 12 contact each other and are held in said position by the magnetic forces applied by the magnets 18 of at least one of the contacting holding arms 12. It could also be sufficient to provide a magnet 18 only at every other holding arm 12, in case the holding arms 12 are sufficiently magnetic.

In the transfer area 5 different package bodies 4 are inserted in the cells 3, whereby the package bodies 4 push against the actuation levers 13 with such high forces, that the magnetic connection between the holding arms 12 of neighboring cells 3 get released, so that the holding arms 12 can be moved in the holding position again.

It is understood that neither the magnets 17 for holding the actuation levers 13 at the base element 9 of the cells 3 in the active position nor the magnets holding 18 the holding arms 12 together in the transfer position are essential. The magnets 17,18 could also be dispensed with. It is possible that as an alternative spring means could be provided instead of the magnets 17,18 at the base element 9, the actuation levers 13 and/or the holding arms 12. For example, at least one spring means could be connected to the swivel element 11 in such a way that the swivel element 11 is held in two different positions by the spring means. In one position, the holding arm 12 is in the holding position and the actuating lever 13 is in the active position. In the other position, the holding arm 12 is in the transfer position and the actuation lever 13 is in the passive position. To move the swivel element 11 from one position to the other, the swivel element 11 must be moved past a dead center. This principle is regularly applied when using gas springs, which hold a component in two different positions and at the same time allow for the component to be moved back and forth between the positions.

As a further example the actuation lever 13 could be held in a form-fit manner at the base element 9. This could for example be achieved by a recess at the base element 9 in which the actuation lever 13 engages downwards in the active position due to the weight force of the swivel element 11. In order to allow for the swivel element 11 being displaced back in a position in which the actuation lever 13 is in the passive position and the holding arm 12 is in the transfer position. The recess of the base element 9 could have an inclined sliding surface on which the actuation lever 13 can slide upwards when the swivel element 11 is swivel back in a position in which the actuation lever 13 is in the passive position and the holding arm 12 is in the transfer position.

Further alternatives for exerting forces to the actuation lever 13 or the holding arm 12 in a way that displacing the actuation lever 13 form the active position to the passive position and/or vice versa as well as displacing the holding arm 12 from the holding position in the transfer position and/or vice versa requires more force but is not prevented may be provided.

## Claims

1. Transport apparatus (1) for transporting package bodies (4), comprising a conveyor (2) having a plurality of cells (3) for conveying package bodies (4) in the cells (3), wherein the conveyor (2) is designed to circumferentially convey the cells (3) in an endless fashion, wherein each cell (3) comprises at least one holding arm (12) for holding a package body (4) in the cell (3), wherein the at least one holding arm (12) is displaceable between a holding position for holding the package body (4) and a transfer position for taking over the packaging body (4) by the cell (3), wherein the at least one holding arm (12) is coupled to at least one actuation lever (13) designed to be forcefully displaced from an passive position into an active position by the package body (4) while taking over the package body (4) by respective cell (3), wherein the at least one actuation lever (13) is designed to forcefully displace the at least one holding arm (12) of respective cell (3) from the transfer position into the holding position by displacement of the actuation lever (13) from the passive position into the active position and wherein the at least one actuation lever (13) and/or cell (3) is designed such that the actuation lever (13) is held in a form-fit or force-fit manner at a base element of the cell (3) in the active position.

2. Transport apparatus according to claim 1,
**characterized in that**,
the actuation lever (13) is provided next to the base element of the cell (3) and is designed to be displaced from the passive position into the active position by a rear side of the packaging body (4) facing away from the opening of the cell (3) with the at least one holding arm (12) in the transfer position while inserting the package body (4) into the respective cell (3).

3. Transport apparatus according to claim 1 or 2,
**characterized in that**,
each cell (3) has at least two holding arms (12) for holding the package body (4) at and/or from opposing sides and that the at least one actuation lever (13) is provided at least essentially between the holding arms (12), in particular next to the base element (9).

4. Transport apparatus according to any one of claims 1 to 3,
**characterized in that**,
each cell (3) has at least two actuation levers (13) and **in that** each actuation lever (13) is firmly connected to one holding arm (12) of the respective cell (3).

5. Transport apparatus according to any one of claims 1 to 4,
**characterized in that**,
the at least one actuation lever (13) and at least one holding arm (12) are part of a swiveling element (11) of the respective cell (3) designed to be swiveled about a swivel axis between the actuation lever (13) and the holding arm (12) for displacing the at least one holding arm (12) from the transfer position into the holding position while displacing the actuation lever (13) from the passive position into the active position and vice versa.

6. Transport apparatus according to any one of claims 1 to 5,
**characterized in that**,
the at least one holding arms (12) is designed to positively hold the package body (4) of respective cell (3) at the front side of the package body (4) in the holding position and **in that** the front side is adjacent to the free end of the holding arms (12) and/or facing away of the rear side of the packaging body (4) adjacent to the at least one actuation lever (13) and/or facing away from the at least one actuation lever (13) and/or facing away from the base element (9).

7. Transport apparatus according to any one of claims 1 to 6,
**characterized in that**
the at least one actuation lever (13) is held by clamping forces and/or by magnetic forces and/or spring forces and/or in the active position at the base element (9) of the cell (3).

8. Transport apparatus according to any one of claims 1 to 7,
**characterized in that**,
conveyor (2) is designed to convey the cells (3) along at least one curve between a transfer area (5) for taking over package bodies (4) and a discharge area for discharging package bodies (4) and that the cells (3) are designed for holding the package bodies (4) in the cells (3) against centrifugal forces acting at the package bodies (4) while being conveyed along the curve.

9. Transport apparatus according to any one of claims 1 to 8,
**characterized in that**,
at least some of the holding arms (12), in particular every second holding arm (12), are/is provided with at least one magnet (18) such that adjacent holding arms (12) of neighboring cells (3) are held onto each other by magnetic forces in the transfer position.

10. Transport apparatus according to any one of claims 1 to 9,
**characterized in that**,
at least one discharge guide (8) is provided in a discharge area and is designed to push package bodies (4) out of respective cells (3) when conveyed passed the discharge guide (8).

11. Method for transporting package bodies (4) with a transport apparatus (1) according to any one of claims 1 bis 10,
- wherein the package bodies (4) are inserted into cells (3) at a transfer area (5), conveyed along at least one curve and discharged from the cells (3) at a discharge area (7),
- wherein the package bodies (4) when inserted into the cells (3) engage with at least one actuation lever (13) in the cells (3) and forcefully displace the at least one actuation lever (13) from a passive position into an active position,
- wherein the at least one actuation lever (13) while being displaced from a passive position into an active position forcefully displaces at least one holding arm (12) of the respective cell (3) form a transfer position into a holding position,
- wherein the at least one holding arm (12) of each cell (3) being arranged in the holding position holds a package body (4) in a form-fit or force-fit manner against discharging in a discharge direction (D) relative to the cell (3) while traveling along the at least one curve.

12. Method according to 11,
wherein the actuation lever (13) is held in the active position a form-fit or force-fit manner, in particular by at least one magnet (17) or spring member, at a base element (9) of the cell (3).

13. Method according to 11 or 12,
- wherein the cells (3) are conveyed past a discharge guide (8) in a discharge area (7) and
- wherein the package bodies (4) engage with the at least one discharge guide (8) in the discharge area while being conveyed past the discharge guide (8) such that the package bodies (4) are pushed out of the respective cells (3).

14. Method according to any one of claims 11 to 13,
wherein the holding arms (12) are forcefully displaced from the holding position into the transfer position by the package bodies (4) being pushed out of the respective cells (3) thereby forcefully displacing the actuation lever (13) from the active position into the passive position.

15. Method according to any one of claims 11 to 14,
wherein the adjacent holding arms (12) of neighboring cells (3) are holding each other in the transfer position while the cells (3) are conveyed from the discharge area (7) to the transfer area (5), in particular by magnetic forces.
